# FASCICULE DE BREVET EUROPEEN

(11) **EP 2 338 768 B1**
(45) Date de publication et mention de la délivrance du brevet: **29.04.2020**
(21) Numéro de dépôt: 10195583.9
(22) Date de dépôt: 17.12.2010
(51) Int. Cl.: B62D 29/04, F41H 7/04, F41H 5/04

(54) **Dispositif de renforcement du blindage d'un véhicule**
Verstärkungsvorrichtung einer Fahrzeugspanzerung
Reinforcement device for a vehicle's armour-plating

(30) Priorité: 23.12.2009 FR 0959456
(43) Date de publication de la demande: 29.06.2011
(73) Titulaire: Tencate Advanced Armour, 38270 Primarette (FR)
(72) Inventeur: Bianchini, David, 69560 Saintes Colombes (FR); Gaulard, Didier, 69560 Saint Cyr (FR)
(74) Mandataire: Verriest, Philippe

(56) Documents cités:
- EP-A1- 0 592 821
- EP-A2- 1 564 520
- EP-A2- 2 128 557
- EP-A2- 2 133 650
- WO-A2-2009/140331
- WO-A2-2012/059089
- US-A- 5 533 781
- US-A1- 2007 238 379
- US-A1- 2010 119 747
- OGORKIEWICZ R M: "ARMOURED VEHICLES OF COMPOSITE MATERIALS", INTERNATIONAL DEFENSE REVIEW, JANE'S INFORMATION GROUP, COULSDON, SURREY, GB, vol. 22, no. 7, 1 juillet 1989 (1989-07-01), page 969/970, XP000068343, ISSN: 0020-6512

## Description

La présente invention concerne le domaine des véhicules blindés et en particulier un dispositif de renforcement du blindage de tels véhicules.

Le document US 2007/0238379 A1 décrit un dispositif de renforcement de ce type comprenant une structure en matériau composite multiaxiale obtenue par un drapage de plusieurs plis.

Les parties basses des véhicules blindés, notamment les passages de roue et les soubassements, sont constitués de plusieurs éléments d'acier découpés, pliés puis soudés ensemble.

Les épaisseurs importantes de 4 à 8 mm et la nature des aciers utilisés ne permettent pas de les mettre en œuvre par emboutissage, ce qui supprimerait une grande partie des raccords par soudure ou rivetage nécessaires à la jonction entre deux éléments.

Ces liaisons entre les différents éléments d'acier sont des faiblesses potentielles de la structure du véhicule, notamment par rapport aux sollicitations mécaniques créées par le souffle de l'explosion d'une mine ou d'un engin explosif improvisé sous les roues ou sous le plancher du véhicule.

En pénétrant dans l'habitacle d'un véhicule blindé, le souffle d'une explosion engendre une accélération brusque des éléments qu'il traverse. Ces éléments peuvent être des objets se trouvant dans l'habitacle et dont la mise en mouvement peut blesser grièvement et même tuer les occupants du véhicule mais peuvent également être les occupants du véhicule dont les pieds se trouvent directement au contact des éléments composant le plancher du véhicule qui subit directement les effets de la déflagration de l'explosif.

Des dispositifs de siège (« blast seats », « shock absorbant seats ») permettent de limiter les effets de l'accélération soudaine du plancher sur le corps humain cependant ces dispositifs se révèlent dans certains cas insuffisants surtout lors de l'explosion de charges importantes.

De plus, le déchirement d'une zone de liaison suite à une déflagration permet à l'onde de pression précédent le front de flammes issue de la déflagration de pénétrer à l'intérieur de l'habitacle du véhicule. La pression de cette onde acoustique peut alors se propager à l'intérieur de l'habitacle ce qui peut blesser ou tuer la totalité des occupants du véhicule.

La présente invention a pour but de résoudre tout ou partie des inconvénients mentionnés ci-dessus.

A cet effet la présente invention a pour objet un dispositif de renforcement tel que défini dans la revendication 1.

Cette disposition évite l'ouverture des soudures et donc la pénétration de l'onde de pression acoustique à l'intérieur de l'habitacle du véhicule blindé ou civil.

De plus, le fait que la structure en matériau composite soit multiaxiale réduit les chances de rupture de la structure en matériau composite.

Le fait que la structure en matériau composite soit réalisée en une seule pièce apporte de la rigidité et diminue donc la déflection dynamique du sol, créant ainsi moins de blessures aux jambes, moins de déformation sous les sièges et moins de risque de projections des objets fixés au sol du véhicule tels que support radio et accessoires.

Selon un mode de réalisation, la structure en matériau composite comprend des fibres continues s'étendant de part et d'autre de la zone de liaison.

Cette disposition permet une meilleure résistance à l'onde de choc générée lors d'une explosion de part et d'autre de la zone de jonction entre deux éléments de la structure du véhicule.

Selon un mode de réalisation, le dispositif est conformé pour pouvoir être appliqué du côté extérieur des éléments de structure du véhicule.

Cette disposition permet de protéger directement les jonctions des éléments de structure recouverts par le dispositif.

Selon un mode de réalisation, le dispositif est conformé pour pouvoir être appliqué du côté intérieur des éléments de structure du véhicule.

Le fait que le dispositif comporte plusieurs surfaces dites principales, d'exposition à une explosion, dépourvues de moyens de fixation traversant la structure du véhicule a pour effet de ne pas transmettre directement d'onde de choc issue d'une explosion.

Selon un mode de réalisation, la structure en matériau composite est fabriquée dans une matière à fort pouvoir de dissipation d'ondes de souffle, tel la fibre de verre, la fibre d'aramide.

Selon un mode de réalisation, la structure en matériau composite est un matériau dit sandwich comportant une âme, c'est-à-dire une partie médiane en mousse structurale rigide ou en nid d'abeille (NIDA).

Cette disposition permet d'augmenter la résistance aux ondes de souffle en insérant entre deux plis ou couches de matériau composite une âme permettant d'apporter plus de cohésion au dispositif de renforcement.

Selon un mode de réalisation, la structure en matériau composite multiaxiale est issue de moulage.

La présente invention a également pour objet un ensemble comprenant une structure de véhicule comprenant au moins deux éléments de structure reliés par une zone de liaison, et un dispositif de renforcement.

La présente invention est issue d'un procédé de réalisation comportant les étapes de :
- définission du gabarit du dispositif en fonction de la forme de la région de la structure du véhicule à recouvrir,
- réalisation de la structure en matériau composite par un procédé de :
   - moulage au contact par voie humide tel que le drapage, le moulage sous vide, ou
   - de moulage de préimprégnés, ou
   - de moulage par injection basse pression tel que l'infusion, ou
   - de moulage par transfert de résine ou RTM (Resin Transfer Moulding).

Ce procédé permet de disposer d'un dispositif dont la réalisation est facilement transposable à tout type de véhicule blindé ou civil.

De toute façon, l'invention sera bien comprise à l'aide de la description qui suit, en référence au dessin schématique annexé représentant, à titre d'exemples, les principes de l'invention.
La figure 1 présente un premier mode de réalisation du dispositif permettant le renforcement des éléments de blindage au niveau du passage de roues d'un véhicule militaire à roues.
La figure 2 présente le dispositif de la figure 1 en situation sur le passage de roue du châssis d'un véhicule militaire.
La figure 3 présente un second mode de réalisation du dispositif permettant le renforcement du blindage au niveau d'un passage de chenilles connu sous le nom de sponson d'un véhicule à chenilles ainsi qu'un troisième mode de réalisation du dispositif permettant le renforcement du blindage au niveau du plancher d'habitacle d'un même véhicule à chenilles.
La figure 4 présente une vue en coupe du véhicule présenté à la figure 3.
La figure 5 représente un mode de réalisation illustrant l'orientation du drapage entre deux plis superposés de bandes de tissu préimprégnées de résine constituant le dispositif des figures précédentes.

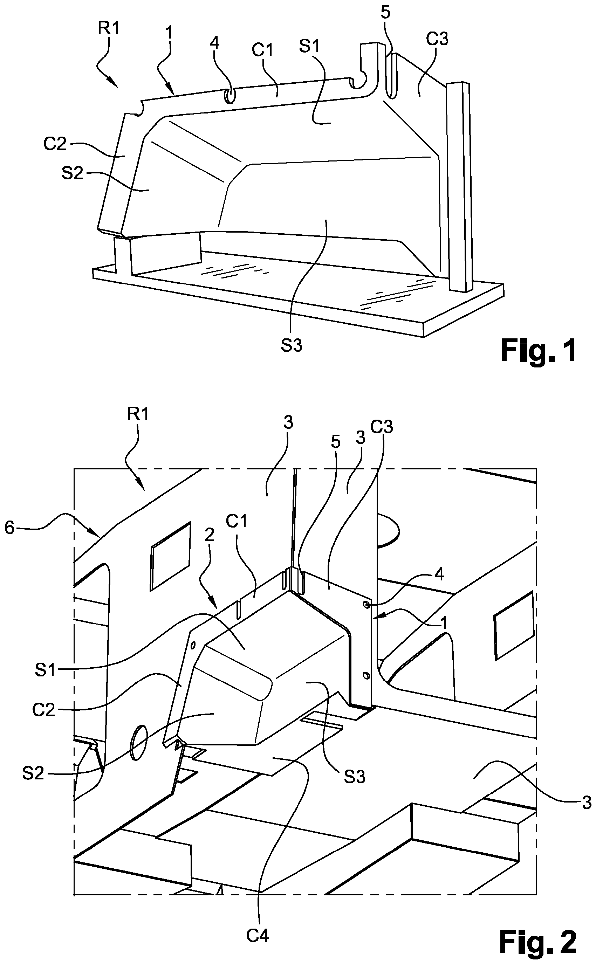

Comme illustré à la figure 1, le dispositif de renforcement 1 selon un premier mode de réalisation R1 est une structure en matériau composite réalisée en une seule pièce comprenant plusieurs surfaces principales S1, S2, S3 d'exposition à une explosion, bordées chacune de un ou deux contours C1, C2, C3, C4.

Il doit être entendu par le terme « surface principale » et par le terme « contour », une surface comprenant des limites définies par les extrémités de ladite surface, certaines de ces extrémités pouvant coïncider avec l'intersection avec une autre surface.

L'orientation de chacune de ces surfaces S1, S2, S3 et de chacun de ces contours C1, C2, C3, C4 suit sensiblement celle d'un élément 3 de blindage du passage de roue 2 d'un véhicule blindé à roues matérialisé à la figure 2 par la structure 6 composée de plusieurs éléments 3 de blindage.

Chacune de ces surfaces principales S1, S2, S3 et chacun de ces contours C1, C2, C3, C4 forme entre eux un congé reliant deux surfaces ou contours ou une surface et un contour afin d'échelonner le passage d'une surface à une autre.

Certains contours C1, C2, C3, C4 comportent des trous 4 et/ou des échancrures 5 afin de prendre en compte des éléments en saillie 7 des surfaces des éléments de blindage 3 situés à proximité du passage de roue 2.

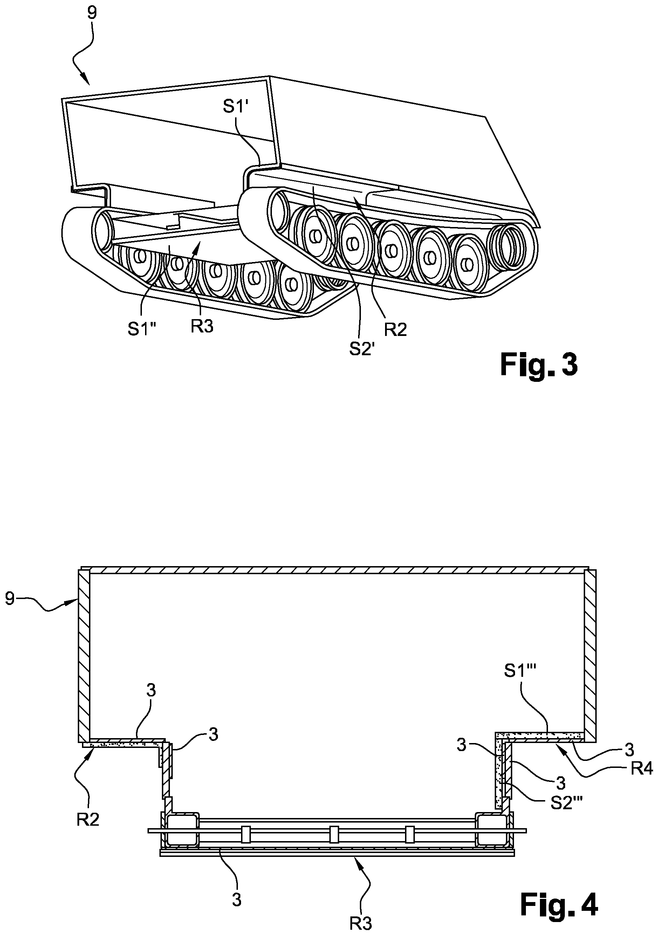

Comme illustré à la figure 3, le dispositif de renforcement 1 selon un second mode de réalisation R2, ne faisant pas partie de l'invention, est une structure en matériau composite réalisée en une seule pièce destinée à être appliqué sur le sponson 8 d'un véhicule à chenille 9.

Dans ce mode de réalisation R2, la structure en matériau composite présente deux surfaces principales S1' et S2' d'exposition reliées par un congé afin d'échelonner le passage d'une surface à l'autre.

Cette même figure 3 montre également le dispositif de renforcement 1 selon un troisième mode de réalisation R3, ne faisant pas partie de l'invention, dans lequel il est destiné à venir recouvrir la partie extérieure du plancher du véhicule blindé à chenille 9.

Dans ce mode de réalisation R3, la structure en matériau composite présente une unique surface principale S1" plane recouvrant entièrement tous les éléments 3 de la partie basse du blindage du véhicule blindé à chenille 9.

Le dispositif 1 ainsi conformé est fixé par collage à l'aide de résine au passage de roue 2 du véhicule dont il épouse parfaitement la forme et couvre ainsi les zones de liaison 11 entre les différents éléments 3 consituant le passage de roue 2, le sponson 8 ou bien la partie extérieure du plancher du véhicule blindé à chenille 9.

Un matériau composite tel qu'utilisé dans l'invention, comporte plusieurs empilements ou drapage de plis ou couches orientés selon des directions différentes entre deux plis superposés. Chaque plis est réalisé à partir de bandes de tissus fibreux préimprégnés, par exemple de résine époxy à matrice thermodurcissable, conférant son orientation à chaque pli.

La structure en matériau composite est fabriquée par moulage avec un tissu fibreux à fort pouvoir de dissipation d'ondes de souffle, tel la fibre de verre ou la fibre d'aramide. Ces fibres sont multiaxiales, c'est-à-dire comprenant des orientations différentes entre deux plis superposés, et comprennent des fibres continues s'étendant de part et d'autre des zones de liaison 11 entre deux éléments 3 de blindage.

Le moulage de la structure en matériau composite lui conférant sa forme définitive est obtenu suite au drapage consistant à croiser plusieurs plis 10 de bandes 12 de tissu fibreux préimprégnées de résine epoxy à matrice thermodurcissable. Ces tissus fibreux préimprégnées sont eux-mêmes formés de fibres de tissu ayant subi un traitement d'ensimage pour leur donner une bonne adhésion avec la résine. Le drapage des tissus fibreux préimprégnées dans le moule nécessite un ou plusieurs compactages intermédiaires permettant d'assurer un bon contact entre les différents plis 10.

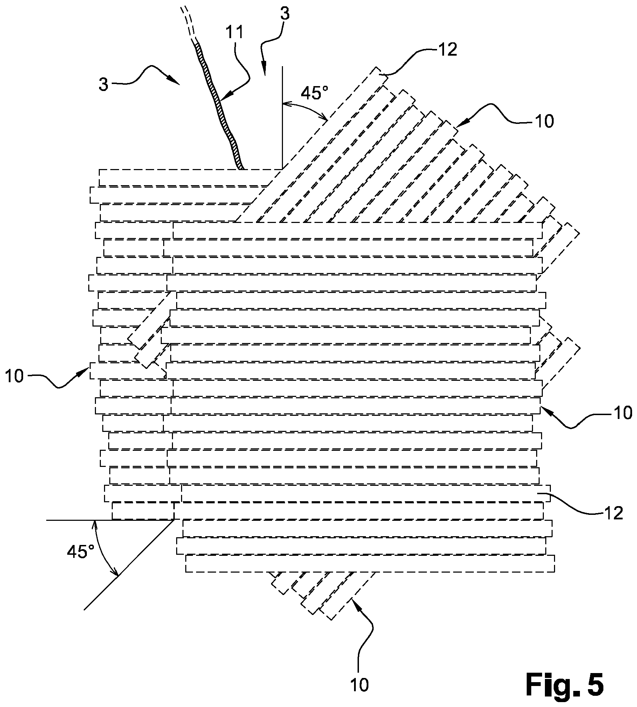

Comme illustré dans le mode de réalisation de la figure 5, le drapage des plis 10 est bidirectionnel avec une orientation des plis 10 de 0°/45° pour un taux de résine allant de 30 à 50% de la masse de la structure en matériau composite.

Ainsi, les coupes de tissus préimprégnés nécessaires au drapage du moule ne sont pas alignés d'un pli à l'autre afin de ne pas créer de zone mécaniquement faible, et ne sont jamais alignés avec les coins des éléments 3 recouvert qui sont des zones de faiblesse des éléments 3 lors d'une explosion.

La cuisson est réalisée dans une étuve avec compactage au sac à vide.

Cette technique permet d'obtenir un taux de fibres élevé ainsi qu'une bonne reproductibilité permettant la fabrication en série.

Ainsi, lors d'une explosion déclenchée par une roue ou par une chenille d'un véhicule blindé par exemple par son passage au dessus d'une mine, la déflagration va générer une onde de souffle qui va atteindre un passage de roue 2, un sponson 8 ou la partie extérieure du plancher du véhicule blindé à chenille 9.

De part leurs géometries, un passage de roue et un sponson sont des zones concaves formant un entonnoir pour le souffle de l'explosion.

Ces parties, ne pouvant pas résulter d'un emboutissage de part l'épaisseur du blindage, comportent plusieurs éléments 3 reliés entre eux par leurs extrémités formant ainsi des zones de liaison 11 d'éléments 3 de blindage.

La partie extérieure du plancher du véhicule blindé à chenille 9 n'est pas concave en elle-même et peut se présenter en un seul élément 3 reliant les longerons du véhicule 9.

Cependant, celle-ci subit directement le souffle de l'explosion de par sa situation par rapport au sol. De plus, de part l'étendue de la surface qu'elle occupe, cette partie peut facilement se déformer et transmettre l'accélération de cette déformation à l'intérieur de l'habitacle du véhicule 9.

Sans l'application du dispositif 1, les sollicitations mécaniques résultantes de l'explosion vont s'exercer sur chacun des éléments 3 faisant de ces zones de liaison 11 des zones de faiblesse susceptibles de se rompre.

Avec l'application du dispositif 1 dans ces parties, les sollicitations mécaniques sont distribuées sur l'ensemble de la surface de la structure en matériau composite, le souffle est contenu et dévié vers la périphérie de la structure sans pouvoir être directement transmis sur les éléments 3 de blindage, ce qui limite les déformations et les déchirures des parties basses métalliques de la caisse du véhicule.

En effet, le dispositif 1 ne comprend pas d'une part de moyens de fixation le traversant, ce qui constituerait des points de concentration des sollicitations mécaniques exercées par le souffle d'une explosion et donc des points de faiblesse du dispositif 1, et ne comprend pas d'autre part de moyens de fixation traversant les éléments 3 de blindage, ce qui constituerait des ponts de transmission de sollicitations mécaniques de l'extérieur du véhicule vers l'intérieur ainsi que de potentielles projectiles projetés à travers l'habitacle.

Les sollicitations mécaniques résultantes de l'explosion vont engendrer des frottements entre les fibres des bandes 12 qui compose le dispositif 1 ainsi qu'une rupture de ces fibres pour certaines d'entre elles.

Le travail mécanique qu'exerce le souffle de l'explosion sur le dispositif 1 est donc partiellement absorbé par les frottements des fibres entre elles ainsi que par leur rupture. Le dispositif 1 avec ces fibres joue ainsi le rôle d'amortisseur du souffle de l'explosion, ce qui permet de préserver les zones de contact 11 des éléments 3 de blindage recouverts par le dispositif 1.

Le dispositif de renforcement 1 assure ainsi l'intégrité de la structure du véhicule après explosion, en particulier l'absence de pénétration de fragments dans le véhicule, et l'absence de rupture de la coque du véhicule, qui laisserait rentrer dans le véhicule une pression acoustique mortelle.

La figure 4 montre une coupe transversale de la caisse du véhicule blindé 9 illustré à la figure 3 et montre de plus un quatrième mode de réalisation R4 du dispositif de renforcement 1 ne faisant pas partie de l'invention dans lequel celui-ci est appliqué à l'intérieur du véhicule à chenille 9 au niveau du sponson 8.

Dans ce mode de réalisation R4, la structure en matériau composite comporte deux surfaces principales S1'" et S2'".

Dans cette configuration la structure en matériau composite assure la cohésion de divers éléments 3 susceptibles d'être projetés lors d'une explosion, ce projectile pouvant blesser, voire tuer une personne se trouvant dans l'habitacle.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

C'est ainsi que le dispositif n'est nullement limité aux considérations géométriques ainsi qu'aux matériaux décrits ici à titre d'exemples.

De même, l'invention ne se limite nullement à son application sur des véhicules blindés ou militaires mais trouve également des applications sur des véhicules civils par exemple du type 4X4 avec un renforcement sur les passages de roues et/ou une protection du plancher du véhicule.

## Revendications

1. Dispositif de renforcement (1) pouvant être appliqué à des éléments (3) composant la structure (6) d'un véhicule blindé ou civil, le dispositif de renforcement (1) comprenant une structure en matériau composite multiaxiale étant obtenue par un drapage de plusieurs plis (10) de bandes (12) de tissu préimprégnées de résine epoxy à matrice thermodurcissable, les bandes (12) de tissus fibreux préimprégnées d'un pli (10) conférant une direction générale audit pli (10), deux plis (10) consécutifs étant croisés, ladite structure en matériau composite étant définie en fonction la forme de la région de la structure du véhicule à recouvrir et étant conformée pour être fixée aux éléments par collage à l'aide d'une résine, le drapage des plis (10) étant bidirectionnel avec une orientation des plis (10) de 0°/45°, la structure en matériau composite étant réalisée en une seule pièce,
ladite structure est conformée pour être fixée aux éléments (3) de la structure (6) d'une partie inférieure du véhicule blindé ou civil de façon à recouvrir l'ensemble d'une région disposée autour d'une jonction (11) de deux éléments (3) de ladite structure (6) du véhicule,
ledit tissu comprend des fibres continues conformées pour s'étendre de part et d'autre de ladite jonction (11) entre les deux éléments (3), le tissu ayant subi un traitement d'ensimage, un drapage des plis dans un moule, au moins un compactage intermédiaire, puis une cuisson dans une étuve avec compactage au sac à vide pour un taux de résine allant de 30 à 50% de la masse de la structure en matériau composite,
le dispositif de renforcement (1) étant **caractérisé en ce que** la structure en matériau composite présente plusieurs surfaces dites principales (S1, S2, S3) d'exposition à une explosion, lesdites surfaces principales (S1, S2, S3) étant dépourvues de moyens de fixation traversant la structure (6) du véhicule,
les surfaces principales étant bordées chacune d'un ou deux contours (C1, C2, C3, C4) du dispositif de renforcement (1), l'orientation des surfaces principales (S1, S2, S3) et des contours (C1, C2, C3, C4) étant agencée pour suivre sensiblement celle d'un élément (3) de blindage du passage de roue (2) d'un véhicule blindé à roues, chacune des surfaces principales (S1, S2, S3) et chacun des contours (C1, C2, C3, C4) formant entre eux un congé, certains contours (C1, C2, C3, C4) comportant des trous (4) et/ou des échancrures (5) agencés pour coopérer avec des éléments en saillie (7) des surfaces des éléments de blindage (3) situés à proximité du passage de roue (2).

2. Dispositif (1) selon la revendication 1 conformé pour pouvoir être appliqué du côté extérieur des éléments (3) de la stucture (6) du véhicule.

3. Dispositif (1) selon l'une des revendications 1 ou 2 conformé pour pouvoir être appliqué du côté intérieur des éléments (3) de la structure (6) du véhicule.

4. Dispositif (1) selon l'une des revendications précédentes dans lequel la structure en matériau composite est fabriquée dans une matière à fort pouvoir de dissipation d'ondes de souffle, tel la fibre de verre, la fibre d'aramide.

5. Dispositif (1) selon l'une des revendications précédentes dans lequel la structure en matériau composite est un matériau dit sandwich comportant une âme, c'est-à-dire une partie médiane, en mousse structurale rigide ou en nid d'abeille (NIDA).

6. Dispositif (1) selon l'une des revendications précédentes dans lequel la structure en matériau composite multiaxiale est issue de moulage.

7. Ensemble comprenant un blindage de véhicule comprenant au moins deux éléments (3) de structure du véhicule (6) reliés par une jonction (11), et un dispositif de renforcement (1) selon l'une des revendications 1 à 6.

## Patentansprüche

1. Verstärkungsvorrichtung (1), die an Elemente (3) angebracht werden kann, aus denen sich die Struktur (6) eines gepanzerten oder zivilen Fahrzeugs zusammensetzt, wobei die Verstärkungsvorrichtung (1) eine mehrachsige Struktur aus Verbundwerkstoff umfasst, die durch eine Drapierung mehrerer Stofflagen (10) von mit Epoxidharz mit wärmehärtbarer Matrix vorimprägnierten Gewebebändern (12) erhalten wird, wobei die vorimprägnierten faserartigen Gewebebänder (12) einer Stofflage (10) der Stofflage (10) eine allgemeine Richtung verleiht, wobei zwei aufeinanderfolgende Stofflagen (10) gekreuzt sind, wobei die Struktur aus Verbundwerkstoff in Abhängigkeit von der Form der Region der abzudeckenden Struktur des Fahrzeugs definiert wird, und angepasst ist, um durch Kleben mithilfe eines Harzes an den Elementen fixiert zu werden, wobei die Drapierung der Stofflagen (10) bidirektional mit einer Ausrichtung der Stofflagen (10) von 0°/45° ist, wobei die Struktur aus Verbundwerkstoff aus einem einzigen Stück gefertigt ist,
wobei die Struktur angepasst ist, um an den Elementen (3) der Struktur (6) eines unteren Teils des gepanzerten oder zivilen Fahrzeugs fixiert zu werden, um die Gesamtheit einer Region abzudecken, die um eine Verbindung (11) von zwei Elementen (3) der Struktur (6) des Fahrzeugs angeordnet ist,
wobei das Gewebe durchgehende Fasern umfasst, die angepasst sind, um sich beiderseits der Verbindung (11) zwischen den beiden Elementen (3) zu erstrecken, wobei das Gewebe einer Ölungsbehandlung, einer Drapierung der Stofflagen in einer Form, mindestens einer Zwischenverdichtung, und danach einer Aushärtung in einem Trockenofen samt Vakuumsackverdichtung bei einem Harzgehalt von 30 bis 50% der Masse der Struktur aus Verbundwerkstoff unterzogen wird,
wobei die Verstärkungsvorrichtung (1) **dadurch gekennzeichnet ist, dass** die Struktur aus Verbundwerkstoff mehrere Hauptoberflächen (S1, S2, S3) genannte Oberflächen zum Aussetzen einer Explosion aufweist, wobei die Hauptoberflächen (S1, S2, S3) frei von Fixierungsmitteln sind, die die Struktur (6) des Fahrzeugs durchqueren,
wobei die Hauptoberflächen jeweils von einem oder zwei Konturen (C1, C2, C3, C4) der Verstärkungsvorrichtung (1) umrandet sind, wobei die Ausrichtung der Hauptoberflächen (S1, S2, S3) und der Konturen (C1, C2, C3, C4) angeordnet ist, um im Wesentlichen jener eines Panzerungselements (3) des Radkastens (2) eines gepanzerten Fahrzeugs mit Rädern zu folgen, wobei jede der Hauptoberflächen (S1, S2, S3) und jede der Konturen (C1, C2, C3, C4) zwischen einander eine Auskehlung bilden, wobei bestimmte Konturen (C1, C2, C3, C4) Löcher (4) und/ oder Einbuchtungen (5) beinhalten, die angeordnet sind, um mit den hervorstehenden Elementen (7) der Oberflächen der Panzerungselemente (3) zusammenzuwirken, die sich in der Nähe des Radkastens (2) befinden.

2. Vorrichtung (1) nach Anspruch 1, angepasst, um an der Außenseite der Elemente (3) der Struktur (6) des Fahrzeugs angelegt zu werden.

3. Vorrichtung (1) nach einem der Ansprüche 1 oder 2, angepasst, um an der Innenseite der Elemente (3) der Struktur (6) des Fahrzeugs angelegt werden zu können.

4. Vorrichtung (1) nach einem der vorstehenden Ansprüche, wobei die Struktur aus Verbundwerkstoff aus einer Materie mit starker Druckwellendissipationsleistung, wie Glasfaser, Aramidfaser hergestellt ist.

5. Vorrichtung (1) nach einem der vorstehenden Ansprüche, wobei die Struktur aus Verbundwerkstoff ein Sandwich-Werkstoff genannter Werkstoff ist, der einen Kern, das heißt einen Mittelteil, aus starrem Strukturschaumstoff oder in Wabenform (NIDA) beinhaltet.

6. Vorrichtung (1) nach einem der vorstehenden Ansprüche, wobei die mehrachsige Struktur aus Verbundwerkstoff aus einer Formung stammt.

7. Baugruppe, eine Fahrzeugpanzerung umfassend, die mindestens zwei Strukturelemente (3) des Fahrzeugs (6) umfasst, die durch eine Verbindung (11) und eine Verstärkungsvorrichtung (1) nach einem der Ansprüche 1 bis 6 verbunden sind.

## Claims

1. A reinforcement device (1) which can be applied to elements (3) composing the structure (6) of an armored or civil vehicle, the reinforcement device (1) comprising a multiaxial composite material structure being obtained by a drape-molding of several plies (10) of strips (12) of fabric pre-impregnated with an epoxy resin with a thermosetting matrix, the strips (12) of pre-impregnated fibrous fabrics of a ply (10) conferring a general direction to said ply (10), two consecutive plies (10) being crossed, said composite material structure being defined according to the shape of the region of the structure of the vehicle to be covered and being shaped so as to be fastened to the elements by gluing using a resin, the drape-molding of the plies (10) being bidirectional with an orientation of the plies (10) of 0°/45°, the composite material structure being made integrally in one-piece,
said structure is shaped so as to be fastened to the elements (3) of the structure (6) of a lower portion of the armored or civil vehicle so as to cover the entirety of a region disposed around a juncture (11) of two elements (3) of said structure (6) of the vehicle,
said fabric comprises continuous fibers shaped so as to extend on either side of said juncture (11) between the two elements (3), the fabric having undergone a sizing treatment, a drape-molding of the plies in a mold, at least one intermediate compaction, and then baking in an oven with vacuum bag compaction for a resin ratio ranging from 30 to 50% with respect to the mass of the composite material structure,
the reinforcement device (1) being **characterized in that** the composite material structure has several so-called main surfaces (S1, S2, S3) for exposure to an explosion, said main surfaces (S1, S2, S3) being devoid of any fastening means crossing the structure (6) of the vehicle,
each of the main surfaces being bordered by one or two contours (C1, C2, C3, C4) of the reinforcement device (1), the orientation of the main surfaces (S1, S2, S3) and of the contours (C1, C2, C3, C4) being arranged so as to substantially follow that of an armor elements (3) of the wheel arch (2) of a wheeled armored vehicle, each of the main surfaces (S1, S2, S3) and each of the contours (C1, C2, C3, C4) forming a fillet therebetween, some contours (C1, C2, C3, C4) including holes (4) and/or indentations (5) arranged so as to cooperate with elements (7) projecting from the surfaces of the armor elements (3) located in the proximity of the wheel arch (2).

2. The device (1) according to claim 1, shaped so as to be able to be applied on the external side of the elements (3) of the structure (6) of the vehicle.

3. The device (1) according to any of claims 1 or 2, shaped so as to be able to be applied on the internal side of the elements (3) of the structure (6) of the vehicle.

4. The device (1) according to any of the preceding claims, wherein the composite material structure is manufactured from a material having a high blast waves dissipation capability, such as glass fiber, aramid fiber.

5. The device (1) according to any of the preceding claims, wherein the composite material structure is a so-called sandwich material including a core, that is to say a middle portion, made of a rigid structural foam or of a honeycomb (NIDA).

6. The device (1) according to any of the preceding claims, wherein the multiaxial composite material structure is obtained by molding.

7. A set comprising a vehicle armor comprising at last two structural elements (3) of the vehicle (6) connected by a juncture (11), and a reinforcement device (1) according to any of claims 1 to 6.
